# EUROPÄISCHE PATENTSCHRIFT

(11) **EP 1 083 333 B1**
(45) Veröffentlichungstag und Bekanntmachung des Hinweises auf die Patenterteilung: **02.05.2007**
(21) Anmeldenummer: 00118368.0
(22) Anmeldetag: 24.08.2000
(51) Int. Cl.: F03B 3/12, F03B 3/18

(54) **Vorrichtung zum Heben und Senken von Einheiten zur Erzeugung elektrischer Energie**
Device for lifting or lowering units for the production of electrical energy
Dispositif pour lever ou abaisser des appareils de production d'énergie éléctrique

(30) Priorität: 07.09.1999 AT 153499
(43) Veröffentlichungstag der Anmeldung: 14.03.2001
(73) Patentinhaber: VA TECH HYDRO GmbH, 1141 Wien (AT)
(72) Erfinder: Panholzer, Heinz, Dr., 4203 Altenberg (AT)
(74) Vertreter: Schweinzer, Friedrich

(56) Entgegenhaltungen:
- DE-A- 19 529 847
- US-A- 4 755 690
- US-A- 4 804 855

## Beschreibung

Die vorliegende Erfindung betrifft eine Vorrichtung und ein Verfahren zum Heben und Senken einer Einheit zur Erzeugung elektrischer Energie aus Wasserkraft, weiche zumindest zwei unmittelbar nebeneinander und/oder übereinander angeordnete Turbinen-Generatoreinheiten oder Module, bestehend aus zumindest zwei solcher Turbinen-Generatoreinheiten aufweist, die mittels einer Hebevorrichtung von einer Unterwasser-Betriebsposition in eine darüber befindliche Position und umgekehrt heb bzw. senkbar sind und dabei mittels einer Führungseinrichtung im wesentlichen entlang vertikaler Führungen bewegbar sind.

Einrichtungen zur Erzeugung elektrischer Energie, bei welchen mehrere kleinere Turbinen-Generatoreinheiten in Reihen und Spalten nebeneinander und übereinander in einem Rahmen oder einer versteiften Konstruktion angeordnet sind, sind beispielsweise aus der WO98/11343, der US 4,755,690 oder der US 4,804,855 bekannt. Solche Einrichtungen werden aufgrund ihrer besonders kurzen Bauweise und großen Anströmfläche vorzugsweise an Schleusen, Wehren, Dämmen od. dgl. verwendet, um die gewöhnlicher Weise ungenutzt durchfließende Wassermenge zur Erzeugung elektrischer Energie zu nutzen. Da die Durchströmkanäle für den jeweils vorgesehenen Zweck, insbesondere aber auch für Notfälle, z.B. bei Hochwasser, vorübergehend frei bleiben müssen, ist vorgesehen, daß der Rahmen bzw. die Konstruktion mit den Turbinen-Generatoreinheiten von ihrer Unterwasser-Betriebsposition bis über den Wasserspiegel angehoben und wieder abgesenkt werden können. Ferner müssen die Turbinen-Generatoreinheiten auch zu Wartungszwecken gehoben werden. An vielen Einrichtungen, an welchen Turbinen-Generatoreinheiten angewendet werden können, sind keine Hebeeinrichtungen oder keine für das Gewicht der Turbinen-Generatoreinheiten geeigneten Hebeeinrichtungen, sowie keine ausreichend zuverlässigen Hebeeinrichtungen vorhanden und müssen demnach nachträglich installiert oder adaptiert werden.

Es ist daher eine Aufgabe der vorliegenden Erfindung, eine Vorrichtung und ein Verfahren zum Heben und Senken von Turbinen-Generatoreinheiten zu schaffen, welche durch einfache und zuverlässige Hebeeinrichtungen angehoben werden können, die überdies kostengünstig realisiert und flexibel betrieben werden können.

Diese Aufgaben werden erfindungsgemäß dadurch gelöst, die Führungseinrichtung einen von den Turbinen-Generatoreinheiten oder Modulen lösbar angeordneten Balken aufweist, der Führungselemente zur Führung einer Turbinen-Generatoreinheit bzw. eines solchen Moduls an dem Balken aufweist. Durch den Einsatz des erfindungsgemäßen Führungsbalkens mit den Führungselementen können anstelle der gesamten Anordnung einzelne, lösbar miteinander verbundene Turbinen-Generatoreinheiten oder einzelne Module durch die Hebevorrichtung präzise aufgenommen und geführt angehoben, abgesenkt und präzise an ihren vorgesehenen Betriebspositionen abgesetzt werden. Dadurch kann mit vergleichsweise geringer dimensionierten und damit kostengünstigeren Hebeeinrichtungen das Auslangen gefunden werden. Ferner bietet die erfindungsgemäße Lösung den Vorteil, daß für Wartungsarbeiten nur die zu wartende Turbinen-Generatoreinheit bzw. das zu wartende Modul gehoben werden muß und alle übrigen Turbinen-Generatoreinheiten bzw. Module in Betrieb bleiben können, sodaß auch während eines Wartungsintervalls ungehindert elektrische Energie erzeugt werden kann. Ebenso kann vorgesehen sein, daß bei einer nur teilweise erforderlichen Freigabe des Wasserweges, z.B. bei geringem Hochwasser, nur ein Teil der Turbinen-Generatoreinheiten gehoben werden muß.

Bei einer vorteilhaften Ausführungsvariante der erfindungsgemäßen Vorrichtung bzw. des zugehörigen Verfahrens ist vorgesehen, daß der Balken mit einer Turbinen-Generatoreinheit bzw. einem Modul lösbar verriegelbar ist und die Hebevorrichtung an dem Balken angreift, sodaß der Balken samt der damit verbundenen Turbinen-Generatoreinheit bzw. des Moduls angehoben wird. Damit ist es in vorteilhafter Weise möglich, die genaue Führung der Turbinen-Generatoreinheiten bzw. der Module und das Anheben, sowie Absenken derselben mit einer einzigen und damit einfachen und kostengünstigen Einrichtung zu bewerkstelligen.

Eine weitere Verbesserung im Sinne einer Vereinfachung ist bei einer vorteilhaften Ausführungsform der erfindungsgemäßen Einrichtung dadurch möglich, daß die Führungselemente ein Mittel zur lösbaren Verriegelung des Balkens mit der Turbinen-Generatoreinheit aufweisen, sodaß die zur Führung der Turbinen-Generatoreinheiten oder solcher Module vorgesehenen Elemente zugleich auch das Halten dieser Turbinen-Generatoreinheiten bzw. Module übernehmen können, wodurch sich eine besonders einfache und kostengünstige Lösung ergibt.

Eine vorteilhafte Ausgestaltung für die Führungs- und Verriegelungselemente ergibt sich beispielsweise dadurch, daß diese zumindest einen vertikal ausgerichteten, um seine Längsachse verdrehbaren Bolzen mit zumindest einem Flügel, sowie eine dem Bolzen entsprechende Öffnung mit zumindest einer dem Flügel gegengleichen Ausnehmung aufweisen, wobei der Bolzen mit dem Flügel in die Öffnung einführbar ist, bis sich der Flügel hinter dieser Öffnung befindet und der Bolzen durch Verdrehen des Flügels bezüglich der Ausnehmung verriegelbar ist. In der Praxis hat sich gezeigt, daß es von Vorteil ist, wenn der Bolzen an dem Balken und die Öffnung an der Turbinen-Generatoreinheit bzw. dem Modul vorgesehen sind. Zur Abstützung der Turbinen-Generatoreinheiten bzw. Module hat es sich weiters als vorteilhaft herausgestellt, daß an der Turbinen-Generatoreinheit in einem Abstand unterhalb der Öffnung zumindest eine weitere, mit dieser fluchtende, dem Bolzen entsprechende Öffnung zur seitlichen Abstützung der Turbinen-Generatoreinheit bzw. des Moduls an dem Bolzen vorgesehen ist. Damit kann die Hebevorrichtung auch in einem Horizontalabstand von dem Schwerpunkt der zu hebenden Einheit bzw. des Moduls angreifen, ohne daß ein unerwünschtes Verkippen dieser Einheit bzw. des Moduls auftritt.

Bei vielen praktischen Anwendungen hat es sich als vorteilhaft erwiesen, wenn der Balken mit seinen beiden Enden entlang im wesentlichen vertikaler Führungsschienen geführt ist, da hierbei der gesamte zwischen den Führungsschienen befindliche Abschnitt des Wasserlaufs freigehalten werden kann. Vorzugsweise ist der Balken an zwei in einem Abstand voneinander parallel verlaufenden Schienen geführt und so gegen ein Verkippen gesichert.

Eine besonders kostengünstige Ausführungsform kann dadurch realisiert werden, daß die Führungselemente und/oder Verriegelungselemente zur Ausrichtung mit einer zu hebenden Turbinen-Generatoreinheit bzw. einem Modul entlang des Balkens bewegbar und positionierbar sind, da hierdurch zum Führen und Heben aller Turbinen-Generatoreinheit nur eine einzelne verfahrbare Führungs- und/oder Verriegelungseinrichtung erforderlich ist. Weiters können dadurch Turbinen-Generatoreinheiten einfach entlang des Balkens bewegt werden.

Bei einer Vorrichtung, bei welchem die Turbinen-Generatoreinheiten im Wasserstrom eines Wehrs zwischen zwei benachbarten Wehrpfeilern angeordnet sind, werden die im wesentlichen vertikalen Führungen für den Balken in vorteilhafter Weise an zwei benachbarten Pfeilern eines hydraulischen Wehrs angeordnet. Diese können beispielsweise an zwei einander zugewandten Seitenflächen dieser Pfeiler eingelassen werden.

Zur Verbesserung des Wirkungsgrades der Turbinen-Generatoreinheit ist diesen je ein zwischen den Wehrpfeilern angeordnetes Saugrohr zugeordnet, wobei die Turbinen-Generatoreinheiten bzw. Module mit Hilfe des Führungsbalkens mit den Saugrohren fluchtend ausrichtbar und verankerbar sind. Diese Saugrohre sind vorzugsweise ortsfest an dem Wehr angeordnet. Die Saugrohre können durch Klappen oder Schieber verschlossen werden. Weiters können die Turbinen-Generatoreinheiten mit einem Rechen versehen sein, welcher ortsfest angeordnet ist oder zusammen mit den Turbinen-Generatoreinheiten angehoben wird. Demgemäß ist der Rechen zumindest teilweise modular aufgebaut oder aus einem Teil gefertigt.

Bei einer Anwendung der erfindungsgemäßen Lösung hat es sich als besonders vorteilhaft herausgestellt, wenn zwischen den Wehrpfeilern im Bereich oberhalb der Turbinen-Generatoreinheiten eine die Höhe des Wasserspiegels eingangs der Turbinen-Generatoreinheiten regelnde Stauwand angeordnet ist. Eine vorteilhafte technische Realisierung einer solchen Stauwand ergibt sich durch eine um eine horizontale Querachse verschwenkbare Platte, welche mit hydraulischen und/oder pneumatischen Elementen heb- und senkbar ist. Insbesondere können die pneumatischen Elemente aufblasbare Luftpölster sein, welche in Strömungsrichtung hinter der Platte angeordnet sind und zwischen dieser Platte und dem darunter befindlichen Fundament wirken.

Bei einer alternativen Ausführungsform besteht weiters die Möglichkeit, daß der üblicherweise am Einlaß der Turbinen-Generatoreinheiten angeordnete Rechen zur Gänze oder teilweise mit angehoben wird, und zwar gemeinsam mit den Turbinen-Generatoreinheiten oder separat. Ferner besteht auch die Möglichkeit, die am Auslaß der Turbinen-Generatoreinheiten angeordneten Saugrohre zur Gänze oder Teilweise anzuheben, und zwar ebenso gemeinsam mit den Turbinen-Generatoreinheiten oder separat. Falls die Saugrohre und/oder der Rechen bzw. Teile derselben zusammen mit den Turbinen-Generatoreinheiten angehoben, sind naturgemäß auch diese in der durch die Turbinen-Generatoreinheiten vorgegebenen Weise modular aufgebaut.

Weitere Merkmale und Vorteile der vorliegenden Erfindung ergeben sich aus der nachfolgenden Beschreibung eines nicht einschränkenden Ausführungsbeispiels für die vorliegende Erfindung, wobei auf die beiliegenden Figuren Bezug genommen wird, die Folgendes zeigen:
Fig. 1 eine schematische Darstellung einer Wehranlage, die mit einer erfindungsgemäßen Einrichtung ausgestattet ist, in einer Seitenansicht,
Fig. 2 die Wehranlage von Fig.1 in einer Draufsicht,
Fig. 3 eine schematische Darstellung eines Moduls von Turbinen-Generatoreinheiten mit der erfindungsgemäßen Führungseinrichtung in einer Seitenansicht,
Fig. 4 das Modul von Fig.3 in einer Ansicht von vorne,
Fig. 5 das Modul von Fig. 3 in einer Draufsicht,
Fig. 6 eine schematische Darstellung eines Ausschnittes des Moduls von Fig.3 mit der Führungseinrichtung in einer Seitenansicht,
Fig. 7 der Ausschnitt von Fig. 6 in einer Ansicht von vorne und
Fig. 8 der Ausschnitt von Fig. 6 in einer Draufsicht.

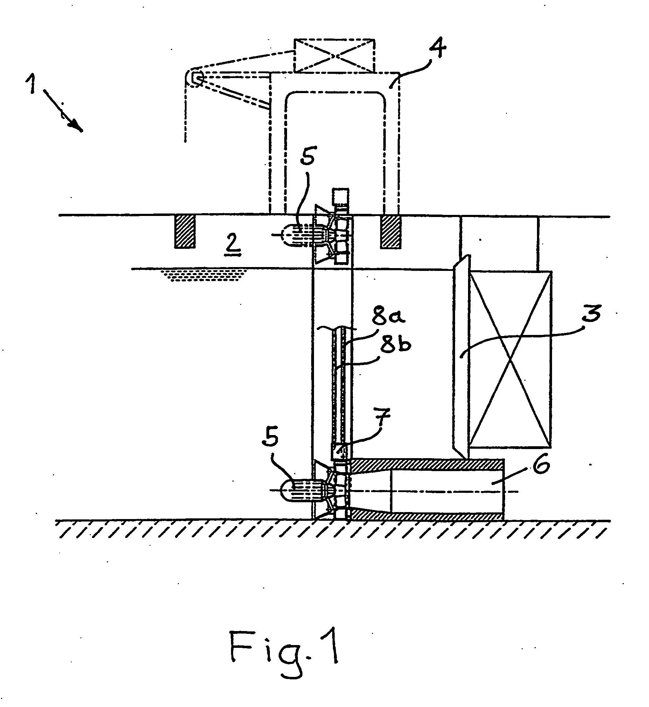

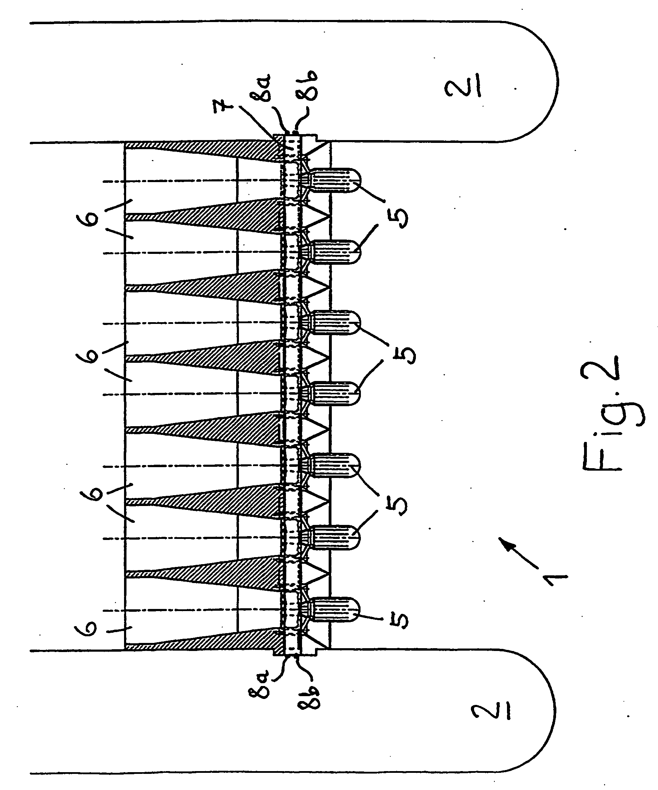

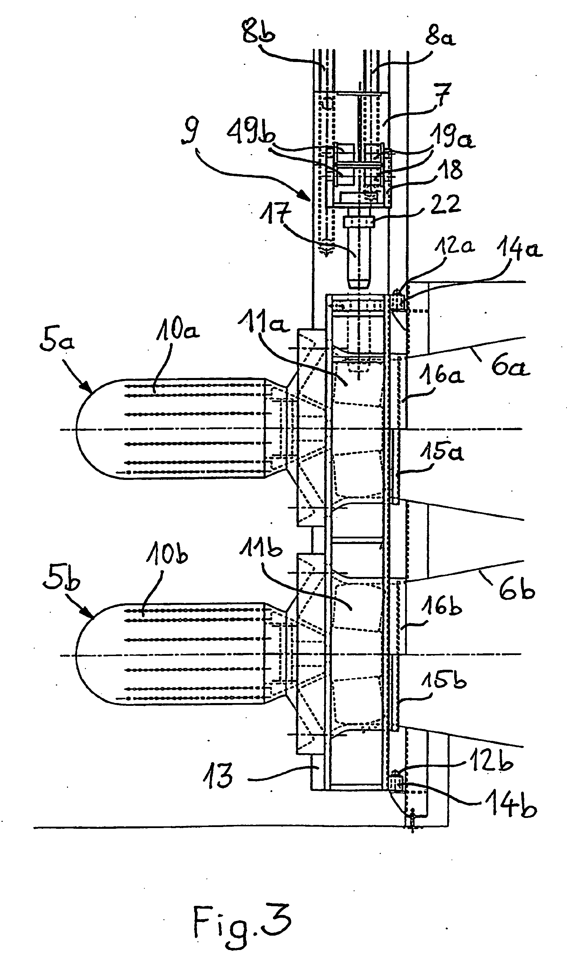

In den Fig. 1 und Fig. 2 ist eine Wehranlage 1 schematisch in einer Seitenansicht bzw. einer Draufsicht dargestellt. Die in den Figuren dargestellte Wehranlage besteht aus zwei gegenüber liegend angeordneten Wehrpfeilern 2, zwischen welchen eine schematisch in Fig. 1 dargestellte Stauwand 3 zur Regulierung der Höhe des Wasserspiegels angeordnet ist. In Fig. 1 strichliert angedeutet ist ein Kran 4, welcher für diverse Hebearbeiten an dieser Wehranlage 1 benötigt wird.

Zur Nutzung der Energie der zwischen den Wehrpfeilern 2 gestauten Wassermenge sind bei dem gezeigten Ausführungsbeispiel zwischen den Pfeilern 2 und unmittelbar oberhalb des Bodens der Wehranlage 1 Turbinen-Generatoreinheiten 5 angeordnet, welche mit je einem Saugrohr 6 fluchtend ausgerichtet sind. Die Saugrohre 6 befinden sich unmittelbar unterhalb der Stauwand 3 und ermöglichen so eine Wasserströmung durch die Turbinen-Generatoreinheiten 5, mittels welcher elektrische Energie erzeugt wird. Die Durchströmquerschnitte der Saugrohre 6 können einzeln oder in Gruppen durch nicht dargestellte Klappen oder Schieber verschlossen werden. Bei dem gezeigten Ausführungsbeispiel sind die Turbinen-Generatoreinheiten 5 bzw. die Saugrohre 6 unmittelbar nebeneinander in einer Reihe zwischen den Pfeilern 2 angeordnet. Die Turbinen-Generatoreinheiten 5 bzw. die Saugrohre 6 können aber auch in mehreren Reihen übereinander oder nebeneinander und übereinander angeordnet sein.

Die in Fig. 1 dargestellten Turbinen-Generatoreinheiten 5 sind lösbar mit dem Boden und/oder den Saugrohren 6 verbunden, sodass die Turbinen-Generatoreinheiten 5 erforderlichenfalls von ihrer Betriebsposition unmittelbar über dem Boden (mit durchgehenden Linien gezeichnete Position in Fig. 1) in eine darüber befindliche Position (strichliert dargestellte Position in Fig. 1) gehoben werden. Das Heben von Turbinen-Generatoreinheiten 5 ist insbesondere bei Hochwasser, bei welchem der maximal mögliche Durchströmquerschnitt zwischen den pfeilern 2 freigehalten werden muß, oder bei Wartungsarbeiten erforderlich.

Bei einer nicht dargestellten Ausführungsform können aber auch zwei oder mehrere nebeneinander und/übereinander angeordnete Turbinen-Generatoreinheiten miteinander zu einem Modul verbunden sein, welches zum Heben lösbar angeordnet ist.

Bei dem gezeigten Ausführungsbeispiel sind die Saugrohre 6 fest mit dem Boden und/oder den Pfeilern 2 verankert. Bei einem hier nicht dargestellten Ausführungsbeispiel können natürlich auch diese Saugrohre lösbar angeordnet und einzeln oder in Modulen und gegebenenfalls mit den zugehörigen Turbinen-Generatoreinheiten angehoben werden.

Weiters kann im Rahmen der vorliegenden Erfindung vorgesehen sein, dass zwei oder mehrere Turbinen mit einem Generator gekoppelt sind, z. B. alle Turbinen eines Moduls mit einem einzelnen Generator für dieses Modul.

Zum kontrollierten und positionsgenauen Heben von einzelnen Turbinen-Generatoreinheiten 5 oder Modulen ist erfindungsgemäß ein im wesentlichen horizontal angeordneter Führungsbalken 7 vorgesehen, welcher bei dem gezeigten Ausführungsbeispiel mit seinen Enden in je zwei entlang der Pfeiler 2 vorgesehenen Führungsschienen 8a, 8b im wesentlichen vertikal geführt ist. Im Rahmen der vorliegenden Erfindung ist natürlich auch eine geneigte Führung des Balkens mit jeder beliebigen Steigung möglich. Ferner können alle geeigneten zur Führung eines solchen Balkens 7 möglichen Führungsmittel, so z. B. auch nur eine einzelne Schiene od.dgl. vorgesehen sein.

An dem Führungsbalken 7 sind in den Fig. 1 und 2 nicht näher dargestellte Führungselemente vorgesehen, welche zur Führung und Positionierung einzelner Turbinen-Generatoreinheiten 5 bzw. Module bei deren Hebe- und Senkbewegung geeignet sind. Sofern diese Führungselemente des Balkens 7 mit den Turbinen-Generatoreinheiten 5 verriegelbar sind oder separate geeignete Verriegelungsmittel an dem Führungsbalken vorgesehen sind, können die Turbinen-Generatoreinheiten 5 mittels des Balkens 7 auch gehoben werden. Andernfalls werden die Turbinen-Generatoreinheiten 5 mittels einer geeigneten separaten Hebevorrichtung gehoben und der Führungsbalken 7 entweder mitgehoben oder über eine separate Hebevorrichtung synchron angehoben. Zum Heben der Turbinen-Generatoreinheiten 5 und/oder des Balkens 7 können alle geeigneten Hebevorrichtungen eingesetzt werden, vorzugsweise solche Hebevorrichtungen, die an einer Wehranlage bereits installiert sind, wie der Hebekran 4 in Fig. 1. Aus Sicherheitsgründen kann zusätzlich zu einer Haupthebevorrichtung auch eine Hilfshebevorrichtung für einen Notfall, z. B. bei Ausfall der Haupthebevorrichtung vorgesehen sein.

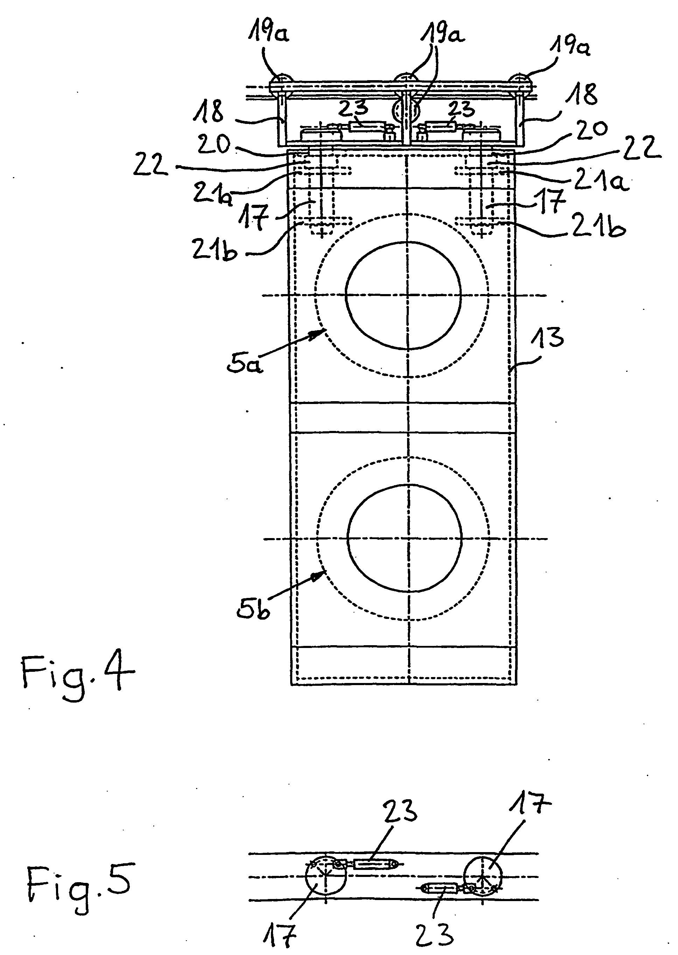

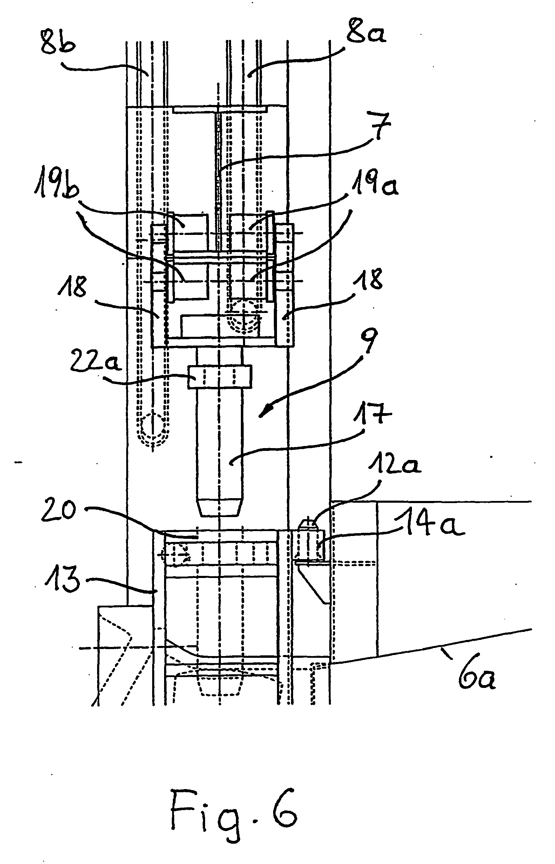

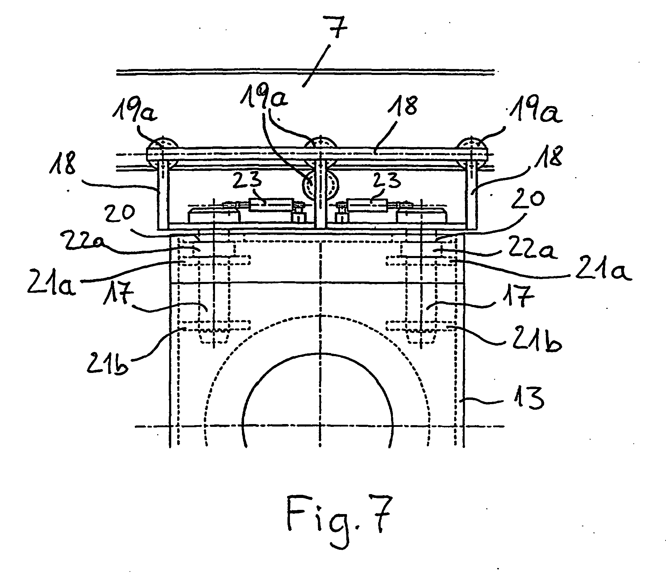

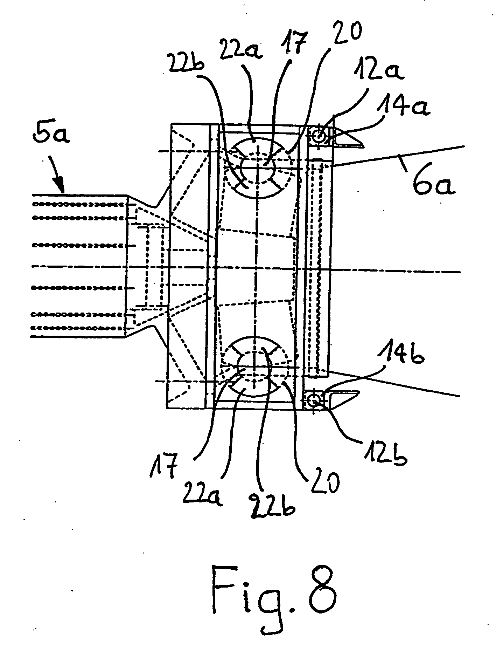

In den Figuren 3 bis 8 ist ein Ausführungsbeispiel für das oben angesprochene Führungs- und/oder Verriegelungsmittel 9 für den Führungsbalken 7 für die Turbinen-Generatoreinheiten 5a, 5b im Detail dargestellt, wobei in dem Ausführungsbeispiel der Fig. 3 bis 8 zwei übereinander angeordnete, zu einem Modul zusammengefasste Turbinen-Generatoreinheiten 5a, 5b geführt und gehoben werden. Folglich sind an der dem Generator 10a, 10b abgewandten Seite der Turbine 11a, 11b zwei übereinander angeordnete Saugrohre 6a, 6b vorgesehen, welche mit den zugeordneten Turbinen-Generatoreinheiten 5a, 5b fluchtend ausgerichtet und fest mit der Wehranlage verbunden sind.

Die positionsgenaue Ausrichtung eines Moduls 5a, 5b erfolgt über zwei paarweise übereinander angeordnete Zapfen 12a, 12b, welche mit den Saugrohren 6a, 6b ortsfest verbunden sind, wobei ein Zapfenpaar 12b vorzugsweise unterhalb des unteren Saugrohres 6b und das zweite Zapfenpaar 12a vorzugsweise oberhalb des oberen Saugrohres angeordnet ist. An dem die Turbinen-Generatoreinheiten 5a, 5b verbindenden gemeinsamen Rahmen 13 sind an der den Saugrohren 6a, 6b zugewandten Vorderseite entsprechende, paarweise angeordnete untere und obere Bohrungen, 14a, 14b vorgesehen, welche in der Betriebsposition des Moduls 5a, 5b die Zapfen 12a, 12b aufnehmen. Eine weitere Verankerung ist aufgrund des Eigengewichtes der Turbinen-Generatoreinheiten 5a, 5b nicht erforderlich.

Zur vereinfachten Ausrichtung und Abdichtung der Vorderseite der Turbinen-Generator einheiten 5a, 5b mit dem Querschnitt der Saugrohre 6a, 6b ist an den dem Rahmen 13 zugewandten Enden der Saugrohre 6a, 6b je eine in Richtung der Turbinen 11a, 11b vorspringende untere Halbschale 15a, 15b und an der den Saugrohren 6a, 6b zugewandten Vorderseite des Rahmens 13 je Turbine 11a, 11b eine vorspringende obere Halbschale 16a, 16b vorgesehen. Durch diese unteren und oberen Halbschalen 15a, 15b bzw. 16a, 16b entsteht eine Überlappung der Anschlußstücke, welche eine besonders gute Positionierung und Abdichtung bei besonders einfacher Lösbarkeit dieser Anschlußstücke ermöglicht.

Zur Führung und Verriegelung der Turbinen-Generatoreinheiten 5a, 5b bei deren Heben und Senken sind unterhalb des Führungsbalkens 7 zwei in Richtung des Balkens 7 nebeneinander angeordnete vertikale Bolzen 17 vorgesehen, welche in einem gemeinsamen Rahmen 18 angeordnet sind, welcher zur Ausrichtung mit der Betriebsposition der Turbinen-Generatoreinheiten 5a, 5b entlang des Balkens 7 bewegbar ist. Zu diesem Zweck sind an dem Rahmen 18 paarweise Rollen 19a, 19b oder Bolzen vorgesehen, welche an einer horizontalen Führungsfläche des Führungsbalkens 7, z. B. der seitlichen Vorsprünge eines als I-Träger ausgebildeten Führungsbalkens, abgestützt sind. Vorzugsweise sind die Bolzen 17 und der Rahmen 18 so mit dem Führungsbalken 7 verbunden, dass ein Verkippen dieser Elemente bezüglich des Rahmens 7 nicht möglich ist. An der Oberseite des Rahmens 13 für die Turbinen-Generatoreinheiten 5a, 5b sind zwei den Bolzen 17 zugeordnete Öffnungen 20 vorgesehen, in welche die Bolzen 17 von oben eingeführt werden können, sodaß eine Führung quer zu diesen Bolzen 17 möglich ist. Zur Stabilisierung der Bolzen 17 sind an der Innenseite des Rahmens 13 je zwei in einem Abstand übereinander angeordnete Laschen 21a, 21b vorgesehen, die je eine mit den Zapfen 17 fluchtende Bohrung aufweisen, welche -bis auf Toleranzen- dem exakt dem Querschnitt der Zapfen 17 entspricht. Durch diese Laschen 21a, 21b ist auch ein Verkippen der Turbinen-Generatoreinheiten 5a, 5b bezüglich der Zapfen 17 bzw. des Rahmens 18 und somit auch des Führungsbalkens 7 verhinderbar.

Um die Turbinen-Generatoreinheiten 5a, 5b mit dem Führungsbalken 7 heben zu können, sind an dem Bolzen 17 zusätzlich Verriegelungselemente in Form von je zwei diametral gegenüberliegend angeordneten Flügeln 22a, 22b angeordnet, welche durch die eine gegengleiche Ausnehmung aufweisende Öffnung 20 des Rahmens 13 hindurchgeführt werden können, bis die Oberseite dieser Flügel 22a, 22b sich unterhalb der Öffnung 20 des Rahmens 13 befinden. Weiters sind die Bolzen 17 drehbar an dem Rahmen 18 angeordnet und mit einer an diesem Rahmen angeordneten Einrichtung 23 zum Verdrehen der Bolzen 17 um ihre eigene Achse versehen, z.B. eine hydraulische, pneumatische, elektrische oder magnetische Vorrichtung.

Durch die Verdrehbarkeit des Bolzens 17 mit den Flügeln 22a und 22b können diese bezüglich der gegengleichen Öffnung 20 ausgerichtet, durch diese Öffnung hindurchgeführt und durch Verdrehen um einen bestimmten Winkel, z. B. 90°, in eine Position gebracht werden, in welcher sich die Flügel 22a, 22b gänzlich unterhalb des Rahmens 13 befinden und somit dieser Rahmen 13 und die damit verbundenen Turbinen-Generatoreinheiten 5a, 5b durch die Bolzen 17 bzw. deren Flügel 22a, 22b getragen werden. Somit können die Turbinen-Generatoreinheiten 5a, 5b durch eine nicht dargestellte, an dem Balken angreifende Hebevorrichtung angehoben und abgesenkt werden.

Nachfolgend wird, sofern nicht bereits aus den obigen Ausführungen verständlich, das Verfahren zum Heben und Senken von Turbinen-Generatoreinheiten bzw. Modulen solcher Einheiten näher erläutert.

Soll eine Turbinen-Generatoreinheit 5 bzw. ein Modul solcher Einheiten 5a, 5b aus ihrer Betriebsposition gehoben werden, werden die Führungs- und/oder Verriegelungselemente 9 in eine ausgerichtete Position oberhalb dieser Turbinen-Generatoreinheit 5 bzw. des Moduls 5a, 5b gebracht und der Balken 7 bis auf die Oberseite der Turbinen-Generatoreinheit 5 bzw. des Moduls 5a, 5b abgesenkt. An dieser Stelle kann gegebenenfalls eine Feinjustierung vorgenommen werden. Zur Führung der Turbinen-Generatoreinheit 5 bzw. des Moduls 5a, 5b bei dem nachfolgenden Hebevorgang werden die Zapfen 17 in die Öffnung 20 eingeführt, wobei an den Zapfen und der Öffnung entsprechende konische Führungsflächen zur positionsgenauen Ausrichtung vorgesehen sein können. Zur Verriegelung der Zapfen 17 werden diese um ihre Längsachse um einen bestimmten Winkel verdreht, sodass die Flügel 22a, 22b im Sinne eines Bajonett-Verschlusses in eine Position unterhalb des Rahmens bewegt werden. Somit können die Turbinen-Generatoreinheiten 5 bzw. Module 5a, 5b zusammen mit dem Balken 7 in eine Position oberhalb der Wasseroberfläche gehoben werden. Gegebenenfalls können diese Turbinen-Generatoreinheiten 5, 5a, 5b in ihrer gehobenen Position in Richtung eines Pfeilers 2 verschoben und dort an einer Wartungs- oder Lagerstation abgesetzt werden.

Sollte eine Turbinen-Generatoreinheit 5 bzw. ein Modul solcher Einheiten 5a, 5b von einer Position oberhalb des Wasserspiegels in ihre Betriebsposition gebracht werden, wird diese Einheit 5 bzw. dieses Modul 5a, 5b mittels der Führungs- und/oder Verriegelungselemente unterhalb des Balkens 7 angeordnet und unmittelbar oberhalb der Betriebsposition ausgerichtet. Danach werden die Turbinen-Generatoreinheit 5 bzw. das Modul 5a, 5b zusammen mit dem Balken 7 in die Unterwasserbetriebsposition abgesenkt, wobei in der Betriebsposition die Bohrungen 14a, 14b in die Zapfen 12a, 12b eingreifen und die Turbinen-Generatoreinheit 5 bzw. das Modul 5a, 5b dort fixieren.

Durch Verdrehen des Bolzens 17 mit seinen Flügeln 22a, 22b um einen bestimmten Winkel, bei welchem die Flügel 22a, 22b mit der gegengleichen Ausnehmung der Öffnung 20 ausgerichtet sind, können die Zapfen 17 und somit der Führungsbalken 7 ungehindert angehoben werden. Dieser steht somit für das Heben und Senken einer weiteren Einheit bzw. eines weiteren Moduls bereit.

Beim Heben und Senken von Turbinen-Generatoreinheiten 5a, 5b, bei welchem die mit Bezug auf die Fig. 3 beschriebenen halbschalenförmigen Überlappungen vorhanden sind, ist vorgesehen, dass diese bei einem Anheben um einen bestimmten Betrag in horizontaler Richtung von Saugrohren 6a, 6b weg bewegt werden, um eine Beschädigung der halbschalenförmigen Überlappungen 15a und 16b zu vermeiden. Diese Bewegung kann durch eine geeignete Führung der Schienen 8a, 8b für den Führungsbalken 7, z. B. durch einen geneigten Abschnitt dieser Schienen realisiert werden.

Abschließend ist noch zu bemerken, dass das oben mit Bezug auf die Fig. 3 bis 8 beschriebene Ausführungsbeispiel für die Führungs- und Verriegelungselemente in keiner Weise einschränkend sind. Im Rahmen der vorliegenden Erfindung sind alle dem Fachmann bekannten und für den gegenständlichen Anwendungsfall geeigneten Führungs- und Verriegelungselemente umfasst.

Üblicherweise ist vor den Einlässen der Turbinen-Generatoreinheiten ein in den Figuren nicht dargestellter Rechen vorgesehen, um eine Verschmutzung oder Beschädigung der Turbinen zu vermeiden. Im Rahmen der vorliegenden Erfindung kann vorgesehen sein, daß der Rechen fest an dem Boden verankert ist oder zur Gänze oder Teilweise entweder zusammen mit den Turbinen-Generatoreinheiten oder separat angehoben werden kann, z.B. für Reinigungszwecke. Ebenso kann analog zu den Saugrohren eine Verankerung der Turbinen-Generatoreinheiten bzw. eine vorzugsweise überlappende Abdichtung der Turbinen-Generatoreinheiten mit diesem Rechen vorgesehen sein.

Ebenso ist die Anwendung der vorliegenden Erfindung nicht auf Wehranlagen beschränkt, sondern umfasst alle möglichen, durch einen Fachmann realisierbaren Anwendungsfälle der erfindungsgemäßen Einrichtung, so zum Beispiel auch an Schleußen, Stauseen oder Trinkwasser-Reservoirs.

## Patentansprüche

1. Vorrichtung zum Heben und Senken einer Einheit zur Erzeugung elektrischer Energie aus Wasserkraft, welche zumindest zwei unmittelbar nebeneinander und/oder übereinander angeordnete, miteinander verbundene Turbinen-Generatoreinheiten (5) oder Module, bestehend aus zumindest zwei solcher Turbinen-Generatoreinheiten (5) aufweist, die mittels einer Hebeeinrichtung von einer Unterwasser-Betriebsposition in eine darüber befindliche Position und umgekehrt heb- bzw. senkbar und dabei mittels einer Führungseinrichtung im wesentlichen entlang vertikaler Führungen (8a, 8b) bewegbar sind, **dadurch gekennzeichnet, dass** die Führungseinrichtung einen von den Turbinen-Generatoreinheiten oder Modulen lösbar angeordneten Balken (7) aufweist, der Führungselemente (9) zur Führung einer Turbinen-Generatoreinheit (5) bzw. eines solchen Moduls an dem Balken (7) aufweist.

2. Vorrichtung nach Anspruch 1, **dadurch gekennzeichnet, dass** der Balken (7) mit einer Turbinen-Generatoreinheit (5) bzw. einem Modul lösbar verriegelbar ist und die Hebevorrichtung an dem Balken (7) angreift.

3. Vorrichtung nach Anspruch 2, **dadurch gekennzeichnet, dass** die Führungselemente (9) ein Mittel zur lösbaren Verriegelung des Balkens (7) mit der Turbinen-Generatoreinheit (5) aufweisen.

4. Vorrichtung nach Anspruch 3, **dadurch gekennzeichnet, dass** die Führungs- und Verriegelungselemente (9) zumindest einen vertikal ausgerichteten, um seine Längsachse verdrehbaren Bolzen (17) mit zumindest einem Flügel (22), sowie eine dem Bolzen (17) entsprechende Öffnung mit zumindest einer dem Flügel (22) gegengleichen Ausnehmung (20) aufweisen, wobei der Bolzen (17) mit dem Flügel in die Öffnung einführbar ist, bis sich der Flügel hinter dieser Öffnung befindet und der Bolzen durch Verdrehen des Flügels bezüglich der Ausnehmung (20) verriegelbar ist.

5. Vorrichtung nach Anspruch 4, **dadurch gekennzeichnet, dass** der Bolzen (17) an dem Balken (7) und die Öffnung an der Turbinen-Generatoreinheit (5) vorgesehen sind, wobei an der Turbinen-Generatoreinheit (5) in einem Abstand unterhalb der Öffnung zumindest eine weitere, mit dieser fluchtende, dem Bolzen (17) entsprechende Öffnung zur seitlichen Abstützung der Turbinen-Generatoreinheit (5) bzw. des Moduls an dem Bolzen (17) vorgesehen ist.

6. Vorrichtung nach einem der Ansprüche 1 bis 5, **dadurch gekennzeichnet, dass** der Balken (7) mit seinen beiden Enden entlang im wesentlichen vertikaler Führungsschienen (8a, 8b) geführt ist.

7. Vorrichtung nach einem der Ansprüche 1 bis 6, **dadurch gekennzeichnet, dass** die Führungselemente und/oder Verriegelungselemente (9) zur Ausrichtung mit einer zu hebenden Turbinen-Generatoreinheit (5) bzw. einem Modul entlang des Balkens (7) bewegbar und positionierbar sind.

8. Vorrichtung nach einem der Ansprüche 1 bis 7, bei welchem die Turbinen-Generatoreinheiten (5) im Wasserstrom eines Wehrs (1) zwischen zwei benachbarten Wehrpfeilern (2) angeordnet sind, **dadurch gekennzeichnet, dass** die im wesentlichen vertikalen Führungen (8a, 8b) für den Balken (7) an zwei benachbarten Pfeilern (2) eines hydraulischen Wehrs (1) angeordnet sind.

9. Vorrichtung nach Anspruch 8, **dadurch gekennzeichnet, dass** jeder Turbinen-Generatoreinheit (5) je ein zwischen den Wehrpfeilern (2) angeordnetes Saugrohr (6) zugeordnet ist, wobei die Turbinen-Generatoreinheiten (5) bzw. Module mit Hilfe des Führungsbalkens (7) mit den Saugrohren (6) fluchtend ausrichtbar und verankerbar sind.

10. Vorrichtung nach Anspruch 8 oder 9, **dadurch gekennzeichnet, dass** zwischen den Wehrpfeilern (2) im Bereich oberhalb der Turbinen-Generatoreinheiten (5) eine die Höhe des Wasserspiegels eingangs der Turbinen-Generatoreinheiten (5) regelnde Stauwand (3) angeordnet ist.

11. Vorrichtung nach Anspruch 9, **dadurch gekennzeichnet, dass** die Stauwand (3) eine um eine horizontale Querachse verschwenkbare Platte aufweist, welche mit hydraulischen und/oder pneumatischen Elementen heb- und senkbar ist.

12. Vorrichtung nach Anspruch 10, **dadurch gekennzeichnet, dass** die pneumatischen Elemente aufblasbare Luftpölster sind, welche in Strömungsrichtung hinter der Platte angeordnet sind und zwischen dieser Platte und dem Fundament wirken.

13. Verfahren zum Heben und Senken einer Einheit zur Erzeugung elektrischer Energie aus Wasserkraft, welche zumindest zwei unmittelbar nebeneinander und/oder übereinander angeordnete Turbinen-Generatoreinheiten (5) oder Module, bestehend aus zumindest zwei solcher Turbinen-Generatoreinheiten (5) aufweist, die mittels einer Führungseinrichtung von einer Unterwasser-Betriebsposition in eine darüber befindliche Position und umgekehrt gehoben bzw. gesenkt werden, **dadurch gekennzeichnet, dass** einzelne Turbinen-Generatoreinheiten (5) bzw. Module nacheinander gehoben bzw. abgesenkt werden und dabei mittels eines im wesentlichen horizontal angeordneten, von den Turbinen-Generatoreinheiten (5) bzw. Modulen lösbaren und durch die Führungseinrichtung geführten Balkens (7) mit Führungselementen (9) zur Führung einer Turbinen-Generatoreinheit (5) bzw. eines Moduls im wesentlichen vertikal geführt werden.

14. Verfahren nach Anspruch 13, **dadurch gekennzeichnet, dass** der Führungsbalken (7) mit der zu hebenden oder zu senkenden Turbinen-Generatoreinheit (5) bzw. des Moduls lösbar verriegelt wird und der im wesentlichen vertikal geführte Balken (7) gehoben bzw. gesenkt wird.

## Claims

1. Device for lifting and lowering a unit for the production of electric energy from water power, comprising at least two turbine generator units (5) arranged immediately adjacent to and/or on top of each other and connected to each other or modules consisting of at least two such turbine generator units (5), which can be lifted or lowered by a lifting device from an operating position under water to a position above it and vice versa, and are therein movable by means of a guiding device essentially along vertical guides (8a, 8b), **characterized by** the guiding device having a girder (7) that is arranged detachably from the turbine generator units or modules and is provided with guiding elements (9) for guiding a turbine generator unit (5) or such a module on the girder (7).

2. Device according to Claim 1, **characterized by** the girder (7) being lockable to a turbine generator unit (5) or a module detachably, and by the lifting device engaging at the girder (7).

3. Device according to Claim 2, **characterized by** the guiding elements (9) having a means for locking the girder (7) detachably to the turbine generator unit (5).

4. Device according to Claim 3, **characterized by** the guiding and locking elements (9) having at least one vertically oriented bolt (17) which can be turned around its longitudinal axis and has at least one wing-like extension (22), and an opening corresponding to the bolt (17) with at least one recess (20) of the same shape as the wing-like extension (22), where the bolt (17) can be inserted into the opening with its wing-like extension until the wing-like extension is behind this opening and the bolt can be locked regarding the recess (20) by turning the wing-like extension.

5. Device according to Claim 4, **characterized by** the bolt (17) being provided on the girder (7) and the opening in the turbine generator unit (5), with at least one further opening corresponding to the bolt (17) being provided at the turbine generator unit (5) at some distance below the opening and level with the opening, for lateral support for the turbine generator unit (5) or the module on the bolt (17).

6. Device according to one of Claims 1 to 5, **characterized by** one of the ends of the girder (7) being guided along essentially vertical guiding rails (8a, 8b).

7. Device according to one of Claims 1 to 6, **characterized by** the guiding elements and/or locking elements (9) being movable and positionable along the girder (7) for the purpose of alignment with a turbine generator unit (5) or module to be lifted.

8. Device according to one of Claims 1 to 7, where the turbine generator units (5) are arranged in the water flow of a weir (1) between two adjacent weir posts (2), **characterized by** the essentially vertical guides (8a, 8b) for the girder (7) being arranged at two adjacent posts (2) of an hydraulic weir (1).

9. Device according to Claim 8, **characterized by** one draft tube (6) arranged between the weir posts (2) being assigned to each turbine generator unit (5), wherein the turbine generator units (5) or modules can be aligned level with the draft tubes (6) by means of the guiding girder (7) and anchored.

10. Device according to Claim 8 or 9, **characterized by** a weir plate (3), which controls the water level on the inlet side of the turbine generator units (5) being arranged between the weir posts (2) in the area above the turbine generator units (5).

11. Device according to Claim 9, **characterized by** the weir plate(3) having a plate that can be pivoted along a horizontal lateral axis and that can be lowered or lifted with hydraulic and/or pneumatic elements.

12. Device according to Claim 10, **characterized by** the pneumatic elements being inflatable cushions that are arranged behind the plate in the direction of the flow and act between this plate and the foundation.

13. Method for lifting and lowering a unit for the production of electric energy from water power, comprising at least two turbine generator units (5) arranged immediately adjacent to and/or on top of each other or modules consisting of at least two such turbine generator units (5), which are lifted or lowered by a guiding device from an operating position under water to a position above it and vice versa, **characterized by** single turbine generator units (5) or modules being lifted or lowered one after the other and in doing so being guided essentially vertically by a girder (7) that is arranged essentially horizontally and is detachable from the turbine generator units (5) or modules and guided by the guiding device using guiding elements (9) for guiding a turbine-generator unit (5) or module.

14. Method according to Claim 13, **characterized by** the guiding girder (7) being lockable detachably to the turbine generator unit (5) or a module to be lifted or lowered, and by the girder (7) that is essentially vertically guided being lifted or lowered.

## Revendications

1. Dispositif de levage et d'abaissement d'une unité de production d'énergie électrique à la base de force hydraulique, comportant au moins deux unités turbine-générateur (5) disposées immédiatement adjacentes l'une à l'autre et/ou l'une au-dessus de l'autre et connectées l'une à l'autre, ou des modules consistant d'au moins deux unités turbine-générateur (5), qui peuvent être levé(e)s ou abaissé(e)s par un dispositif de levage à partir d'une position de service sous l'eau à une position au-dessus d'elle et vice versa, et sont ainsi amovibles par un dispositif de guidage essentiellement le long de guides verticaux (8a, 8b), **caractérise en ce que** le dispositif de guidage a une poutrelle (7), disposée de façon démontable des unités turbine-générateur ou modules, et des éléments de guidage (9) pour guider une unité turbine-générateur (5) ou un tel module sur la poutrelle (7).

2. Dispositif selon la revendication 1, **caractérise en ce que** la poutrelle (7) peut être verrouillée à une unité turbine-générateur (5) ou un module de façon démontable, et que le dispositif de levage s'engrène à la poutrelle (7).

3. Dispositif selon la revendication 2, **caractérise en ce que** les éléments de guidage (9) ont un moyen pour verrouiller la poutrelle (7) de façon démontable à une unité turbine-générateur (5).

4. Dispositif selon la revendication 3, **caractérise en ce que** les éléments de guidage et de verrouillage (9) ont au moins un boulon (17) monté verticalement, pouvant être tourné autour de son axe longitudinal et ayant au moins un élargissement en forme d'aile (22), ainsi qu'une ouverture correspondant au boulon (17) avec au moins un creux (20) de forme identique à celle de l'élargissement en forme d'aile (22), le boulon (17) pouvant être inséré dans l'ouverture avec son élargissement en forme d'aile jusqu'à ce que l'élargissement en forme d'aile se trouve derrière cette ouverture et le boulon puisse être verrouillé quant au creux (20) en tournant l'élargissement en forme d'aile.

5. Dispositif selon la revendication 4, **caractérise en ce que** le boulon (17) est prévu sur la poutrelle (7) et l'ouverture est prévue à l'unité de turbine-générateur (5), au moins une autre ouverture correspondant au boulon (17) étant prévue à l'unité turbine-générateur (5) à quelque distance au-dessous de l'ouverture et s'affleurant à l'ouverture, en tant que support latéral de l'unité turbine-générateur (5) ou du module sur le boulon (17).

6. Dispositif selon l'une des revendications 1 à 5, **caractérise en ce qu'**un des bouts de la poutrelle (7) est guidé le long de rails (8a, 8b) essentiellement verticaux.

7. Dispositif selon l'une des revendications 1 à 6, **caractérise en ce que** les éléments de guidage et/ou de verrouillage (9) sont amovibles et peuvent être positionnés le long de la poutrelle (7) pour les aligner à une unité turbine-générateur (5) ou module à être levé(e).

8. Dispositif selon l'une des revendications 1 à 7, où des unités turbine-générateur (5) sont disposées dans le courant d'eau d'un déversoir (1) entre deux poteaux déversoirs adjacents (2), **caractérise en ce que** les guides essentiellement verticaux (8a, 8b) de la poutrelle (7) sont disposés sur deux poteaux adjacents (2) d'un déversoir hydraulique (1).

9. Dispositif selon la revendication 8, **caractérise en ce qu'**à chaque unité turbine-générateur (5), un tube d'aspiration (6) disposé entre les poteaux déversoirs (2) est attribué, les unités turbine-générateur (5) ou modules pouvant être affleuré(e)s aux tubes d'aspiration (6) par la poutrelle de guidage (7), et ancré(e)s.

10. Dispositif selon la revendication 8 ou 9, **caractérise en ce qu'**une plaque de déversoir (3), qui règle le niveau de l'eau sur le coté d'entrée des unités turbine-générateur (5), est disposée entre les poteaux déversoirs (2) dans la zone au-dessus des unités turbine-générateur (5).

11. Dispositif selon la revendication 9, **caractérise en ce que** la plaque de déversoir (3) est équipée d'une plaque pivotable autour d'un axe transversal horizontal et pouvant être abaissée ou levée avec des éléments hydrauliques et/ou pneumatiques.

12. Dispositif selon la revendication 10, **caractérise en ce que** les éléments pneumatiques sont des coussins gonflables disposés derrière la plaque en direction du courant et agissant entre cette plaque et le massif.

13. Méthode de levage et d'abaissement d'une unité de production d'énergie électrique à la base de force hydraulique, comportant au moins deux unités turbine-générateur (5) disposées immédiatement adjacentes l'une à l'autre et/ou l'une au-dessus de l'autre, ou des modules consistant d'au moins deux de telles unités turbine-générateur (5), qui sont levé(e)s ou abaissé(e)s par un dispositif de guidage à partir d'une position de service sous l'eau à une position au-dessus d'elle et vice versa, **caractérise en ce que** des unités turbine-générateur (5) ou modules sont levé(e)s ou abaissé(e)s l'un(e) après l'autre et ainsi guidé(e)s essentiellement verticalement par une poutrelle (7) disposée essentiellement horizontalement et démontable des unités turbine-générateur (5) ou modules et guidée par le dispositif de guidage avec des éléments de guidage (9) pour guider une unité turbine-générateur (5) ou un module.

14. Méthode selon la revendication 13, **caractérisée en ce que** la poutrelle (7) de guidage est verrouillée à l'unité turbine-générateur (5) ou le module à lever ou abaisser de façon démontable, et que la poutrelle (7) guidée essentiellement verticalement est levée ou abaissée.
